# EUROPEAN PATENT SPECIFICATION

(11) **EP 4 477 768 B1**
(45) Date of publication and mention of the grant of the patent: **17.12.2025**
(21) Application number: 23186257.4
(22) Date of filing: 19.07.2023
(51) Int. Cl.: B21B 19/10, C23C 8/24, C23C 10/28, C23C 8/02, C21D 1/25, C21D 1/58, C21D 1/76, C21D 1/19, C21D 8/10, C21D 9/08, C22C 38/06, C22C 38/26, C22C 38/22, C22C 38/28, F16L 9/02, C21D 9/14, C21D 7/06, B32B 15/01, C22C 18/00, C22C 30/06, B21B 19/04, B21B 19/06

(54) **HIGH-SRENGTH STEEL PIPE FOR HIGH-PRESSURE GAS CYLINDER AND ITS PRODUCING METHOD**
HOCHFESTES STAHLROHR FÜR HOCHDRUCKGASZYLINDER UND VERFAHREN ZU SEINER HERSTELLUNG
TUYAU EN ACIER À HAUTE RÉSISTANCE POUR BOUTEILLE DE GAZ À HAUTE PRESSION ET SON PROCÉDÉ DE PRODUCTION

(30) Priority: 15.06.2023 CN 202310705918
(43) Date of publication of application: 18.12.2024
(73) Proprietor: Jingjiang Special Steel Co., Ltd, Jingjiang Jiangsu 214500 (CN)
(72) Inventor: Zhang, Zhiyuan, Jingjiang, 214500 (CN); Yao, Yong, Jingjiang, 214500 (CN); Ji, Ling, Jingjiang, 214500 (CN); He, Yue, Jingjiang, 214500 (CN); Zhang, Xiaojian, Jingjiang, 214500 (CN); Li, Fei, Jingjiang, 214500 (CN); Li, Xiangjun, Jingjiang, 214500 (CN); Li, Can, Jingjiang, 214500 (CN); Xie, Guannan, Jingjiang, 214500 (CN)
(74) Representative: Huang, Liwei

(56) References cited:
- EP-B1- 2 270 250
- WO-A1-2017/075290
- KUMAR SANDEEP ET AL: "High-Temperature Corrosion Behaviour of CNT-reinforced Zirconium Yttrium Coatings on Boiler Tube Steel in Coal-Fired Boiler of Thermal Power Plant", JOURNAL OF FAILURE ANALYSIS AND PREVENTION, vol. 20, no. 6, 12 January 2020 (2020-01-12), pages 2029 - 2039, XP037312661, ISSN: 1547-7029, DOI: 10.1007/S11668-020-01015-4

## Description

### Technical Field

The invention relates to the technical field of steel pipes, in particular to a high-strength steel pipe for a high-pressure gas cylinder and a producing method thereof.

### Background Art

High-pressure gas cylinders are often used to fill compressed gases such as oxygen, nitrogen, argon, hydrogen and compressed natural gas. They belong to special equipment. They are widely used in chemical industry petroleum, energy, fire protection, automobile and other fields. Therein, the steel pipe for a high-pressure gas cylinder determines the main performance and the application range of high-pressure gas cylinders.

At this stage, steel pipes for high-pressure gas cylinders have been developed from low-carbon steel pipes, medium-carbon steel pipes, carbon-manganese steel pipes to chrome-molybdenum steel pipes. For a chromium molybdenum steel pipe, because chromium and molybdenum elements have a common alloying effect, the steel pipe has good hardenability and resistance to high-temperature tempering, which effectively reduces the internal stress caused by quenching, and improves the resistance to stress corrosion and hydrogen embrittlement. However, high-pressure gas cylinders with high working pressure (20-35MPa) are required in the existing market, which requires steel pipes for high-pressure gas cylinders to have higher tensile strength, yield strength, and toughness, to ensure the safety of gas cylinders. On the other hand, high-pressure gas cylinders need to store corrosion-resistant substances. Thus in order to meet corresponding requirements in application, we need to further improve the corrosion resistance of chrome-molybdenum steel pipes.

In summary, to solve the above problems, producing a high-strength steel pipe for a high-pressure gas cylinder has great value in promoting the development of pressure vessels. KUMAR SANDEEP ET AL: "High-Temperature Corrosion Behaviour of CNT-reinforced Zirconium Yttrium Coatings on Boiler Tube Steel in Coal-Fired Boiler of Thermal Power Plant",JOURNAL OF FAILURE ANALYSIS AND PREVENTION, vol. 20, no. 6, pages 2029-2039, XP037312661,ISSN: 1547-7029, DOI: 10.1007/S11668-020-01015-4 discloses a boiler tube steel with zirconium yttrium coatings.

### Content of Invention

The object of the present invention is to provide a high-strength steel pipe for a high-pressure gas cylinder and its producing method, so as to solve the problem in the above-mentioned background art.

In order to solve the above technical problem, the present invention provides the following technical solutions.

A method for producing a high-strength steel pipe for a high-pressure gas cylinder, comprising the following steps:
Step 1: a continuous-casting round billet is heated, pierced, rolled, and sized to form a seamless steel pipe;
Step 2: the seamless steel pipe is quenched and tempered, so as to obtain a quenched and tempered steel pipe;
Step 3: the quenched and tempered steel pipe is subjected to powder infiltrating and nitriding treatment, so as to obtain a high-strength steel pipe.

The continuous-casting round billet comprises the following elements, by weight percentage, carbon 0.25-0.45%, silicon 0.2-0.36%, manganese 0.4-0.9%, chromium 0.75-1.35%, molybdenum 0.2-0.5%, niobium 0.02-0.05%, zirconium 0.02-0.03%, aluminum 0.02-0.05%, sulfur ≤0.005%, phosphorus ≤0.01%, nickel ≤0.2%, titanium ≤0.01%, nitrogen ≤0.004%, the balance is iron and and unavoidable impurities.

In Step 2, the quenching and tempering treatment includes quenching and tempering; during the quenching process, the quenching heating temperature is 850-900 ° C, the holding time is 30-90 minutes; after that, moving the steel pipe to a quenching medium containing paraffin and copper oxide, and cooling to 180-220°C; then cooling by water to room temperature; tempering temperature is 550-600°C, holding time is 60-120min;

Preferably, the quenching medium contains 98.5-99 wt% paraffin and 1-1.5wt% copper oxide.

The Step 3 includes: (1) the quenched and tempered steel pipe is subjected to shot blasting treatment; after that, the steel pipe is put in a co-infiltration furnace, together with powders of infiltrating agent, setting a rotation speed to be 10-15r/min, a heating rate be 8-10°C/min, and raising the temperature to 400-420°C, using the powders to perform infiltrating and plating for 2-3 hours; after cooling to room temperature, a plated steel pipe is obtained; (2) putting the plated steel pipe in a tube furnace, under a gas atmosphere containing ammonia, at a temperature of 425-500 °C, performing nitriding treatment for 4-6 hours.

The powders of infiltrating agent comprise the following components by weight: 45-55 parts of zinc powders, 5-6 parts of nickel powders, 4-5 parts of indium oxide, 4-6 parts of ammonium chloride, 34-36 parts of aluminum oxide.

Preferably, the gas atmosphere is a mixed gas of nitrogen and ammonia in a ratio of (6-10):1; the gas flow rate is 0.5-0.6 L/min, and the air pressure is 0.01-0.02 MPa.

Preferably, in Step 1, the continuous-casting round billet is heated at a temperature of 1150-1280°C, with a holding time of 3-10 hours, pierced at a temperature of 1100-1150°C, and rolled at a temperature of 1000-1100°C.

Preferably, in Step 1, the sized and formed steel pipe has a outer diameter Φ of 115-279 mm and a wall thickness of 6-10 mm.

The present invention also provides a high-strength steel pipe for a high-pressure gas cylinder, which is obtained from the above-mentioned method.

Compared with the prior art, the present invention has the following beneficial effects :
(1) In the present invention, the quenched and tempered steel pipes are prepared from continuous-casting round billets containing niobium and zirconium elements. Therein, niobium and vanadium have a certain effect of substitution. One mole of niobium can play the role of two moles of vanadiums; thereby producing better refined grains, strengthening the precipitation, improving tempering resistance, and effectively enhancing the strength of steel pipes. Therein, the introduction of zirconium can form Zr[C,N], thereby increasing the transformation temperature of ferrite, refining ferrite grains, inhibiting grain growth, reducing carbide precipitation, and reducing dislocation density. On the other hand, zirconium can play a role like aluminum in fixing nitrogen, and reducing the doping of TiN. Thus the strength and impact toughness of steel pipes are effectively improved.
(2) In order to further increase the strength, the quenching medium of the present invention uses paraffin wax and copper oxide particles. Compared with water, paraffin wax is more difficult to dissipate heat. It can absorb more initial heat and need a longer time for cooling, thereby reducing the speed of releasing stress, and reducing the risk of stress cracking inside the tube. Thereby, the tensile strength of the steel pipe is improved. The introduction of copper oxide can improve the thermal conductivity, and reduce the time cost, on the premise of ensuring a reduction of stress cracking.
(3) In order to improve the corrosion resistance of the steel pipe, the present invention uses powder plating and nitriding treatment to effectively improve the corrosion resistance of the steel pipe. Compared with electroplating and hot-dip plating, powder plating used in the present invention has no disadvantage of hydrogen embrittlement. Therein, powders of infiltrating agent, may include zinc powders, nickel powders, indium oxide, ammonium chloride, and/or aluminum oxide. Ammonium chloride is used as a dispersant and aluminum oxide is used as a diffusing agent, so as to form a zinc-nickel-indium alloy infiltrated layer. Using the co-deposition of indium can modify the zinc-nickel alloy layer, thus improves the overall microstructure, and effectively improves the corrosion resistance.

At the same time, in the present invention, the setting of the metallized layer can improve the nitriding property of the dielectric layer, and can also inhibit the precipitation of chromium nitride and other substances produced by nitriding. On the basis of further enhancing the corrosion resistance, the anti-fatigue performance of the steel pipe is effectively guaranteed, and the toughness of the nitrided layer is improved at the same time. In addition, in the present invention, nitriding treatment also uses low-pressure nitriding. Compared with normal-pressure nitriding, low-pressure nitriding can improve corrosion resistance and strength, and meanwhile effectively improve the surface toughness of the nitrided layer, and suppress excessive rigidity, thereby improve the impact toughness and strength of steel pipes.

### Detailed Embodiments

The technical solutions in the embodiments of the present invention are clearly described below. Evidently, the described embodiments are only some of the embodiments of the present invention, but not all of them.

It should be noted that the purchasers of all the raw materials involved in the present invention do not have any special restrictions. Exemplarily, in the following examples, the zinc powders are produced by atomization method, and have a mesh number of 800 mesh; the nickel powders are produced by atomization method, and have a mesh number of 500 mesh; the copper oxide has a mesh number of 325 mesh; the aluminum oxide has a mesh number of 300 mesh; the indium oxide has a mesh number of 325 mesh, provided by Zhongke Yannuo; the "parts" mentioned below means "parts by mass".

### Example 1:

A method for producing high-strength steel pipes for high-pressure gas cylinders, comprising the following steps:
Step 1: heating a continuous-casting round billet at 1200°C for 4.5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.32%, silicon 0.25%, manganese 0.90%, chromium 1.10%, molybdenum 0.26%, niobium 0.03%, zirconium 0.02%, aluminum 0.015%, sulfur 0.004%, phosphorus 0.008%, nickel 0.18%, titanium 0.0061 %, nitrogen 0.0035%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1) After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

### Example 2:

A method for producing high-strength steel pipes for high-pressure gas cylinders, comprising the following steps:
Step 1: heating a continuous-casting round billet at 1200°C for 4.5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.32%, silicon 0.25%, manganese 0.90%, chromium 1.10%, molybdenum 0.26%, niobium 0.03%, zirconium 0.02%, aluminum 0.015%, sulfur 0.004%, phosphorus 0.008%, nickel 0.18%, titanium 0.0061%, nitrogen 0.0035%, and the balance is iron and unavoidable impurities;
Step 2: quenching and tempering the seamless steel pipe, including: at a quenching temperature of 850°C, holding for 90 minutes, then moving to a quenching medium containing paraffin and copper oxide (98.5 wt% paraffin and 1.5 wt% copper oxide), and cooling to 200 °C, and then cooling by water to room temperature; at a tempering temperature of 580 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 45 parts of zinc powders, 6 parts of nickel powders, 4 parts of indium oxide, 6 parts of ammonium chloride, 34 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

### Example 3:

A method for producing high-strength steel pipes for high-pressure gas cylinders, comprising the following steps:
Step 1: heating a continuous-casting round billet at 1200°C for 4.5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.32%, silicon 0.25%, manganese 0.90%, chromium 1.10%, molybdenum 0.26%, niobium 0.03%, zirconium 0.02%, aluminum 0.015%, sulfur 0.004%, phosphorus 0.008%, nickel 0.18%, titanium 0.0061 %, nitrogen 0.0035%, and the balance is iron and unavoidable impurities;
Step 2: quenching and tempering the seamless steel pipe, including: at a quenching temperature of 900°C, holding for 60 minutes, then moving to a quenching medium containing paraffin and copper oxide (98.5 wt% paraffin and 1.5 wt% copper oxide), and cooling to 200 °C, and then cooling by water to room temperature; at a tempering temperature of 600 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 55 parts of zinc powders, 5 parts of nickel powders, 5 parts of indium oxide, 4 parts of ammonium chloride, 36 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

### Example 4:

A method for producing high-strength steel pipes for high-pressure gas cylinders, comprising the following steps:
Step 1: heating a continuous-casting round billet at 1200°C for 4.5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.28%, silicon 0.31%, manganese 0.83%, chromium 1.15%, molybdenum 0.31%, niobium 0.039%, zirconium 0.022%, aluminum 0.02%, sulfur 0.003%, phosphorus 0.006%, nickel 0.15%, titanium 0.0092%, nitrogen 0.0036%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

### Example 5:

A method for producing high-strength steel pipes for high-pressure gas cylinders, comprising the following steps:
Step 1: heating a continuous-casting round billet at 1200°C for 4.5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.29%, silicon 0.21%, manganese 0.90%, chromium 0.75%, molybdenum 0.46%, niobium 0.022%, zirconium 0.029%, aluminum 0.026%, sulfur 0.005%, phosphorus 0.006%, nickel 0.17%, titanium 0.0063%, nitrogen 0.0037%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

### Example 6:

A method for producing high-strength steel pipes for high-pressure gas cylinders, comprising the following steps:
Step 1: heating a continuous-casting round billet at 1200°C for 4.5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.44%, silicon 0.36%, manganese 0.46%, chromium 1.23%, molybdenum 0.21%, niobium 0.049%, zirconium 0.021%, aluminum 0.05%, sulfur 0.005%, phosphorus 0.008%, nickel 0.18%, titanium 0.0075%, nitrogen 0.0032%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

Comparative example 1: the continuous-casting round billet does not contain niobium or zirconium, but contains vanadium, and the others are the same as that in embodiment 1;
Step 1: heating a continuous-casting round billet at 1200°C for 5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.31%, silicon 0.26%, manganese 0.90%, chromium 1.11%, molybdenum 0.26%, vanadium 0.08%, aluminum 0.023%, sulfur 0.004%, phosphorus 0.006%, nickel 0.19%, titanium 0.0059%, nitrogen 0.0033%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

Comparative example 2: the continuous-casting round billet does not contain zirconium, and the others are the same as that in Example 1;
Step 1: heating a continuous-casting round billet at 1200°C for 5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.38%, silicon 0.30%, manganese 0.70%, chromium 1.14%, molybdenum 0.32%, niobium 0.05%, aluminum 0.021%, sulfur 0.003%, phosphorus 0.010%, nickel 0.20%, titanium 0.008%, nitrogen 0.0038%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

Comparative example 3: the quenching medium is changed, and the others are the same as that in Example 1;
Step 1: heating a continuous-casting round billet at 1200°C for 5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.32%, silicon 0.25%, manganese 0.90%, chromium 1.10%, molybdenum 0.26%, niobium 0.03%, zirconium 0.02%, aluminum 0.015%, sulfur 0.004%, phosphorus 0.008%, nickel 0.18%, titanium 0.0061%, nitrogen 0.0035%, and the balance is iron and unavoidable impurities;
Step 2: quenching and tempering the seamless steel pipe, including: at a quenching temperature of 880°C, holding for 60 minutes, then cooling by water to room temperature; at a tempering temperature of 590 °C, holding for 120 min; so as to obtain a quenched and tempered steel pipe;
Step 3: (1)After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

Comparative example 4: no indium oxide was added in the process of co-infiltration, and the others are the same as that in Example 1;
Step 1: heating a continuous-casting round billet at 1200°C for 5 hours; piercing at 1150°C, rolling at 1100°C, and then sizing and forming to obtain a seamless steel pipe with an outer diameter of Φ220 mm and a wall thickness of 6.5 mm; the continuous-casting round billet comprises the following elements, by weight percentage, carbon 0.32%, silicon 0.25%, manganese 0.90%, chromium 1.10%, molybdenum 0.26%, niobium 0.03%, zirconium 0.02%, aluminum 0.015%, sulfur 0.004%, phosphorus 0.008%, nickel 0.18%, titanium 0.0061 %, nitrogen 0.0035%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1) After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.01 MPa; at a temperature of 485 °C, performing nitriding treatment for 4 hours, and then cooling in a nitrogen atmosphere, so as to obtain a high-strength steel pipe.

Comparative Example 5: During the nitriding process, the air pressure is set to be 0.1 MPa, and the others are the same as that in Example 1;
Step 1: heating a continuous-casting round billet at 1200°C for 5 hours; piercing at 1150°C, rolling at 1100°C, and then sizing and forming to obtain a seamless steel pipe with an outer diameter of Φ 220 mm and a wall thickness of 6.5 mm; the continuous-casting round billet comprises the following elements, by weight percentage, carbon 0.32%, silicon 0.25%, manganese 0.90%, chromium 1.10%, molybdenum 0.26%, niobium 0.03%, zirconium 0.02%, aluminum 0.015%, sulfur 0.004%, phosphorus 0.008%, nickel 0.18%, titanium 0.0061 %, nitrogen 0.0035%, and the balance is iron and unavoidable impurities;
Step 2: quenching and tempering the seamless steel pipe, including: at a quenching temperature of 880°C, holding for 60 minutes, then moving to a quenching medium containing paraffin and copper oxide (99 wt% paraffin and 1 wt% copper oxide), and cooling to 200 °C, and then cooling by water to room temperature; at a tempering temperature of 590 °C, holding for 120 min; so as to obtain a quenched and tempered steel pipe;
Step 3: (1) After shot blasting, the quenched and tempered steel pipe is put in a co-infiltration furnace, together with powders of infiltrating agent; setting a rotation speed to be 10 r/min, a heating rate to be 10°C/min, and raising the temperature to 420°C, using the powders to perform infiltrating and plating for 3 hours, slowly cooling to room temperature, so as to obtain a plated steel pipe; the powders of infiltrating agent comprise the following components by weight: 50 parts of zinc powders, 5 parts of nickel powders, 4 parts of indium oxide, 6 parts of ammonium chloride, 35 parts of aluminum oxide;
(2) putting the plated steel pipe in a tube furnace, in a gas atmosphere (a mixture of nitrogen and ammonia at a ratio of 9:1), setting a gas flow rate to be 0.5 L/min, the air pressure to be 0.1 MPa; at a temperature of 485 °C, performing nitriding treatment for 4 hours, and then cooling in a nitrogen atmosphere, so as to obtain a high-strength steel pipe.

Experiments: the high-strength steel pipes prepared in the examples are tested according to standard GB/T228.1-2010, wherein the sample size is 20 mm×100 mm, and the tensile strength is tested at room temperature; in reference to the standard GB/T229-2007, a sample of 55 mm×10 mm×6.5 mm is prepared, and the impact toughness is tested at a temperature of -50°C. Soaking a sample in 3.5 wt% sodium chloride solution for 35 minutes to perform electrochemical behaviors, wherein the test area is 1 cm², the scanning speed is 1 mV/s, the polarization range (polarization voltage) is 1400-600 mV, and the corrosion current density is tested. The resulted data read like follows:

| Sample | Tensile strength MPa | Transverse impact toughness J/cm² | Corrosion current density µA/cm² |
|---|---|---|---|
| Example 1 | 1290 | 66 | 986 |
| Example 2 | 1276 | 63 | 996 |
| Example 3 | 1269 | 64 | 989 |
| Example 4 | 1293 | 66 | 997 |
| Example 5 | 1271 | 63 | 947 |
| Example 6 | 1246 | 60 | 990 |
| Comparative example 1 | 1052 | 48 | 1066 |
| Comparative example 2 | 1201 | 52 | 1093 |
| Comparative example 3 | 1169 | 45 | 1102 |
| Comparative example 4 | 1221 | 53 | 1163 |
| Comparative example 5 | 1193 | 42 | 1089 |

From the data in the above table, it can be known that the data in Example 1 show that the high-strength steel pipe prepared in the present invention can effectively guarantee and enhance the impact strength on the basis of improving the tensile strength. At the same time, it has excellent corrosion resistance, so that the prepared high-strength steel pipe has a wide range of applications.

Comparing the data of Comparative Examples 1 to 5 with Example 1, it can be found that: in Comparative Example 1, due to the introduction of vanadium and no introduction of niobium and zirconium elements, the tensile strength and impact strength are decreased; the reason is that the niobium has a higher strengthening performance than vanadium, and zirconium can effectively increases the toughness, so that the two elements work synergistically, which effectively guarantee and enhance the impact strength on the basis of improving the tensile strength. This is confirmed by the data of Comparative example 2, wherein both the impact strength and the tensile strength are decreased when no zirconium is introduced. In Comparative example 3, it can be seen that changing the quenching medium increases the internal stress cracks, thereby reducing the overall strength and corrosion resistance; in Comparative example 4, it can be seen that when no indium oxide is introduced during the co-infiltration process, the corrosion resistance and the impact resistance are decreased; in Comparative example 5, due to the increase of air pressure, sediments are formed, thereby decreasing the impact toughness.

Finally, it should be noted that the above descriptions are only preferred embodiments of the present invention, and are not intended to limit the present invention. Although the present invention has been described in detail with reference to the aforementioned embodiments, those skilled in the art can still modify the technical solutions described in the aforementioned embodiments, or perform changes within the scope of the claims.

## Claims

1. A method for producing a high-strength steel pipe for a high-pressure gas cylinder, comprising the following steps:
Step 1: a continuous-casting round billet is heated, pierced, rolled, and sized to form a seamless steel pipe; wherein the continuous-casting round billet comprises the following elements by weight percentage, carbon 0.25-0.45%, silicon 0.2-0.36%, manganese 0.4-0.9%, chromium 0.75-1.35%, molybdenum 0.2-0.5%, niobium 0.02-0.05%, zirconium 0.02-0.03%, aluminum 0.02-0.05%, sulfur ≤0.005%, phosphorus ≤0.01%, nickel ≤0.2%, titanium ≤0.01%, nitrogen ≤0.004%, the balance is iron and and unavoidable impurities.
Step 2: quenching and tempering the seamless steel pipe, so as to obtain a quenched and tempered steel pipe; during the quenching, a heating temperature is 850-900 ° C, a holding time is 30-90 minutes, after that, moving the steel pipe to a quenching medium containing paraffin and copper oxide, and cooling to 180-220 °C; then cooling by water to room temperature; tempering temperature is 550-600 °C, holding time is 60-120min;
Step 3 includes:
Step 3.1: the quenched and tempered steel pipe obtained from the step 2 is subjected to shot blasting treatment; after that, the steel pipe is put in a co-infiltration furnace, together with powders of infiltrating agent, wherein the powders of infiltrating agent comprise the following components by weight: 45-55 parts of zinc powders, 5-6 parts of nickel powders, 4-5 parts of indium oxide, 4-6 parts of ammonium chloride, 34-36 parts of aluminum oxide; setting a rotation speed of the co-infiltration furnace to be 10-15 r/min, a heating rate in the co-infiltration furnace to be 8-10°C/min, and raising the temperature in the co-infiltration furnace to 400-420°C, using the powders to perform infiltrating and plating for 2-3 hours; after the temperature of the co-infiltration furnace is cooled to room temperature, a plated steel pipe is obtained;
Step 3.2: putting the plated steel pipe obtained from the step 3.1 in a tube furnace to performing nitriding treatment, wherein a gas atmosphere in the tube furnace is a mixture of nitrogen and ammonia; at a temperature of 425-500 °C, performing nitriding treatment for 4-6 hours.

2. The method for producing a high-strength steel pipe for a high-pressure gas cylinder according to claim 1, wherein the quenching medium comprises 98.5-99 wt% paraffin and 1-1.5 wt% copper oxide.

3. The method for producing a high-strength steel pipe for a high-pressure gas cylinder according to claim 1 or 2, wherein in the step 3.2, nitrogen and ammonia are mixed in a ratio of (6-10) : 1; gas flow rate is 0.5-0.6 L/min, and air pressure is 0.01-0.02 MPa.

4. The method for producing a high-strength steel pipe for a high-pressure gas cylinder according to any of claims 1 to 3, wherein in the step 1, the continuous-casting round billet is heated at a temperature of 1150-1280°C, with a holding time of 3-10 hours, pierced at a temperature of 1100-1150°C, and rolled at a temperature of 1000-1100°C.

5. The method for producing a high-strength steel pipe for a high-pressure gas cylinder according to any of claims 1 to 4, wherein in the step 1, the sized and formed steel pipe has a outer diameter Φ of 115-279 mm and a wall thickness of 6-10 mm.

6. A high-strength steel pipe for a high-pressure gas cylinder, which is obtained by the method according to any of claims 1 to 5.

## Patentansprüche

1. Verfahren zur Herstellung eines hochfesten Stahlrohrs für einen Hochdruckgaszylinder, umfassend die folgenden Schritte:
Schritt 1: ein Strangguss-Rundbarren wird erhitzt, durchstochen, gewalzt und dimensioniert, um ein nahtloses Stahlrohr zu bilden; wobei der Strangguss-Rundbarren die folgenden Elemente, nach Gewichtsprozent, Kohlenstoff 0,25-0,45 %, Silizium 0,2-0,36 %, Mangan 0,4-0,9 %, Chrom 0,75-1,35 %, Molybdän 0,2-0,5 %, Niob 0,02-0,05 %, Zirkonium 0,02-0,03 %, Aluminium 0,02-0,05 %, Schwefel ≤0,005 %, Phosphor ≤0,01 %, Nickel ≤0,2 %, Titan ≤0,01 %, Stickstoff ≤0,004 % umfasst, der Rest Eisen und unvermeidbare Verunreinigungen ist,
Schritt 2: Abschrecken und Anlassen des nahtlosen Stahlrohrs, um so ein abgeschrecktes und angelassenes Stahlrohr zu erhalten; während des Abschreckens beträgt eine Erwärmungstemperatur 850-900 °C, beträgt eine Haltezeit 30-90 Minuten, danach Bewegen des Stahlrohrs zu einem Abschreckmedium, das Paraffin und Kupferoxid enthält, und Abkühlen auf 180-220 °C; dann Abkühlen durch Wasser auf Raumtemperatur; die Anlasstemperatur beträgt 550-600 °C, die Haltezeit beträgt 60-120 Min.;
Schritt 3 beinhaltet:
Schritt 3.1: das aus Schritt 2 erhaltene abgeschreckte und angelassene Stahlrohr wird einer Strahlmittelbehandlung unterzogen; danach wird das Stahlrohr zusammen mit Infiltrationsmittelpulvern in einen Co-Infiltrationsofen gegeben, wobei die Infiltrationsmittelpulver die folgenden Komponenten nach Gewicht umfassen: 45-55 Teile an Zinkpulvern, 5-6 Teile an Nickelpulvern, 4-5 Teile Indiumoxid, 4-6 Teile Ammoniumchlorid, 34-36 Teile Aluminiumoxid; Einstellen einer Rotationsgeschwindigkeit des Co-Infiltrationsofens auf 10-15 U/Min. einer Heizrate im Co-Infiltrationsofen auf 8-10 °C/Min. und Erhöhen der Temperatur im Co-Infiltrationsofen auf 400-420 °C, wobei die Pulver verwendet werden, um das Infiltrieren und Plattieren für 2-3 Stunden durchzuführen; nachdem die Temperatur des Co-Infiltrationsofens auf Raumtemperatur gekühlt wurde, wird ein plattiertes Stahlrohr erhalten;
Schritt 3.2: Geben des aus Schritt 3.1 erhaltenen plattierten Stahlrohrs in einen Rohrofen, um eine Nitrierbehandlung durchzuführen, wobei eine Gasatmosphäre in dem Rohrofen eine Mischung aus Stickstoff und Ammoniak ist; bei einer Temperatur von 425-500 °C, Durchführen einer Nitrierbehandlung für 4-6 Stunden.

2. Verfahren zur Herstellung eines hochfesten Stahlrohrs für einen Hochdruckgaszylinder nach Anspruch 1, wobei das Abschreckmedium 98,5-99 Gew.-% Paraffin und 1-1,5 Gew.-% Kupferoxid umfasst.

3. Verfahren zur Herstellung eines hochfesten Stahlrohrs für einen Hochdruckgaszylinder nach Anspruch 1 oder 2, wobei, in dem Schritt 3.2, Stickstoff und Ammonak in einem Verhältnis von (6-10) : 1 gemischt werden; die Gasflussrate 0,5-0,6 1/Min. beträgt und der Luftdruck 0,01-0,02 MPa beträgt.

4. Verfahren zur Herstellung eines hochfesten Stahlrohrs für einen Hochdruckgaszylinder nach einem der Ansprüche 1 bis 3, wobei, in dem Schritt 1, der Strangguss-Rundbarren bei einer Temperatur von 1150-1280 °C, bei einer Haltezeit von 3-10 Stunden, erwärmt, bei einer Temperatur von 1100-1150 °C durchstochen und bei einer Temperatur von 1000-1100 °C gewalzt wird.

5. Verfahren zur Herstellung eines hochfesten Stahlrohrs für einen Hochdruckgaszylinder nach einem der Ansprüche 1 bis 4, wobei, in dem Schritt 1, das dimensionierte und gebildete Stahlrohr einen Außendurchmesser Φ von 115-279 mm und eine Wandstärke von 6-10 mm aufweist.

6. Hochfestes Stahlrohr für einen Hochdruckgaszylinder, das durch das Verfahren nach einem der Ansprüche 1 bis 5 erhalten wird.

## Revendications

1. Procédé permettant la production d'un tuyau en acier à haute résistance pour une bouteille de gaz à haute pression, comprenant les étapes suivantes :
étape 1 : une billette ronde de coulée continue est chauffée, percée, laminée et dimensionnée pour former un tuyau en acier sans soudure ; ladite billette ronde de coulée continue comprenant les éléments suivants en pourcentage en poids, carbone 0,25-0,45 %, silicium 0,2-0,36 %, manganèse 0,4-0,9 %, chrome 0,75-1,35 %, molybdène 0,2-0,5 %, niobium 0,02-0,05 %, zirconium 0,02-0,03 %, aluminium 0,02-0,05 %, soufre ≤ 0,005 %, phosphore ≤ 0,01 %, nickel ≤ 0,2 %, titane ≤ 0,01 %, azote ≤ 0,004 %, le reste étant du fer et des impuretés inévitables,
étape 2 : trempe et revenu du tuyau en acier sans soudure, de façon à obtenir un tuyau en acier trempé et revenu ; durant la trempe, une température de chauffage est de 850-900°C, un temps de maintien est de 30-90 minutes, après cela, déplacement du tuyau en acier jusqu'à un milieu de trempe contenant de la paraffine et de l'oxyde de cuivre, et refroidissement à 180-220°C ; puis refroidissement par l'eau à la température ambiante ; la température de revenu est de 550-600°C, le temps de maintien est de 60-120 min ;
étape 3, comprend :
étape 3.1 : le tuyau en acier trempé et revenu obtenu à l'étape 2 est soumis à un traitement de grenaillage ; après cela, le tuyau en acier est placé dans un four de co-infiltration, ensemble avec des poudres d'agent d'infiltration, lesdites poudres d'agent d'infiltration comprenant les composants suivants en poids : 45-55 parties de poudres de zinc, 5-6 parties de poudres de nickel, 4-5 parties d'oxyde d'indium, 4-6 parties de chlorure d'ammonium, 34-36 parties d'oxyde d'aluminium ; réglage d'une vitesse de rotation du four de co-infiltration à 10-15 r/min, d'une vitesse de chauffage dans le four de co-infiltration à 8-10°C/min, et élévation de la température dans le four de co-infiltration à 400-420°C, utilisation des poudres pour réaliser l'infiltration et le placage pendant 2-3 heures ; après que la température du four de co-infiltration est refroidie à la température ambiante, un tuyau en acier plaqué est obtenu ;
étape 3.2 : placement du tuyau en acier plaqué obtenu à l'étape 3.1 dans un four tubulaire pour réaliser un traitement de nitruration, une atmosphère gazeuse dans le four tubulaire étant un mélange d'azote et d'ammoniac ; à une température de 425-500°C, réalisation d'un traitement de nitruration pendant 4-6 heures.

2. Procédé permettant la production d'un tuyau en acier à haute résistance pour une bouteille de gaz à haute pression selon la revendication 1, ledit milieu de trempe comprenant 98,5-99 % en poids de paraffine et 1-1,5 % en poids d'oxyde de cuivre.

3. Procédé permettant la production d'un tuyau en acier à haute résistance pour une bouteille de gaz à haute pression selon la revendication 1 ou 2, dans l'étape 3.2, l'azote et l'ammoniac étant mélangés dans un rapport de (6-10):1 ; le débit de gaz étant 0,5-0,6 L/min et la pression de l'air étant 0,01-0,02 MPa.

4. Procédé permettant la production d'un tuyau en acier à haute résistance pour une bouteille de gaz à haute pression selon l'une quelconque des revendications 1 à 3, dans l'étape 1, ladite billette ronde de coulée continue étant chauffée à une température de 1150-1280°C, avec un temps de maintien de 3-10 heures, percée à une température de 1100-1150°C et laminée à une température de 1000-1100°C.

5. Procédé permettant la production d'un tuyau en acier à haute résistance pour une bouteille de gaz à haute pression selon l'une quelconque des revendications 1 à 4, dans l'étape 1, ledit tuyau en acier dimensionné et formé possédant un diamètre externe Φ de 115-279 mm et une épaisseur de paroi de 6-10 mm.

6. Tuyau en acier à haute résistance pour une bouteille de gaz à haute pression, qui est obtenu par le procédé selon l'une quelconque des revendications 1 à 5.
